# EUROPÄISCHE PATENTSCHRIFT

(11) **EP 1 719 225 B1**
(45) Veröffentlichungstag und Bekanntmachung des Hinweises auf die Patenterteilung: **04.07.2007**
(21) Anmeldenummer: 05706533.6
(22) Anmeldetag: 28.02.2005
(51) Int. Cl.: H02B 13/035

(54) **GEKAPSELTE GASISOLIERTE SCHALTANLAGE**
ENCAPSULATED, GAS-INSULATED SWITCHING INSTALLATION
INSTALLATION DE COMMUTATION A ISOLATION GAZEUSE DANS UNE ENVELOPPE

(30) Priorität: 27.02.2004 EP 04405114
(43) Veröffentlichungstag der Anmeldung: 08.11.2006
(73) Patentinhaber: ABB Technology AG, 8050 Zürich (CH)
(72) Erfinder: HOLAUS, Walter, CH-8047 Zürich (CH); SOLOGUREN-SANCHEZ, Diego, CH-5430 Wettingen (CH); MUELLER, Lorenz, CH-5412 Gebenstorf (CH); BRUCKERT, Michael, CH-8153 Rümlang (CH)
(74) Vertreter: ABB Patent Attorneys
(86) Internationale Anmeldenummer: PCT/CH2005/000114
(87) Internationale Veröffentlichungsnummer: WO 2005/083859

(56) Entgegenhaltungen:
- EP-A- 1 249 910
- WO-A-00/45486
- WO-A-99/52119
- US-B1- 6 437 276
- US-B1- 6 573 469
- US-B1- 6 683 267

## Beschreibung

### TECHNISCHES GEBIET

Bei der Erfindung wird ausgegangen von einer gekapselten gasisolierten Schaltanlage nach dem Oberbegriff von Patentanspruch 1. Diese Kapselung ist mit einem Isoliergas, beispielsweise Stickstoff, Luft, Schwefelhexafluorid (SF₆) allein oder in Mischung, von bis zu einigen bar Druck gefüllt. Die Anlage wird typischerweise mit Spannungen von einigen hundert kV betrieben und enthält als Komponenten mindestens eine vorwiegend horizontal geführte Sammelschiene, einen Leistungsschalter mit zwei Stromanschlüssen, von denen ein erster mit der Sammelschiene verbindbar ist, sowie zwei Trenn- und Erdungsfunktion aufweisende Trennschalter (Kombitrenner).

Die Kombitrenner sind vorzugsweise gleichartig ausgebildet. Ein erster der Kombitrenner trägt einen Abschnitt der Sammelschiene und ist zwischen die Sammelschiene und den ersten Stromanschluss geschaltet. Der zweite Kombitrenner ist zwischen einen Abgang der Anlage oder eine horizontal geführte zweite Sammelschiene der Anlage und den zweiten Stromanschluss des Leistungsschalters geschaltet. Die Kombitrenner nutzen aus, dass in Schaltanlagen die Funktionen Trennen und Erden häufig am gleichen Ort benötigt werden. Dementsprechend weisen die Kombitrenner jeweils ein isoliergasgefülltes Kapselungsgehäuse auf, an dem im Inneren ein Erdungskontakt befestigt ist. Im Gehäuseinneren angeordnet sind ferner ein an einem Stromleiter befestigter Trennerkontakt sowie ein längs einer Achse verschiebbares und entweder mit dem Trenner- oder mit dem Erderkontakt in oder ausser Eingriff bringbares bewegliches Kontaktelement. Das bewegliche Kontaktelement wird von einem durch das Gehäuse geführten Antrieb mit Kraft beaufschlagt. Mit einem einzigen Antrieb können so die Funktionen des Trennens und des Erdens realisiert werden.

### STAND DER TECHNIK

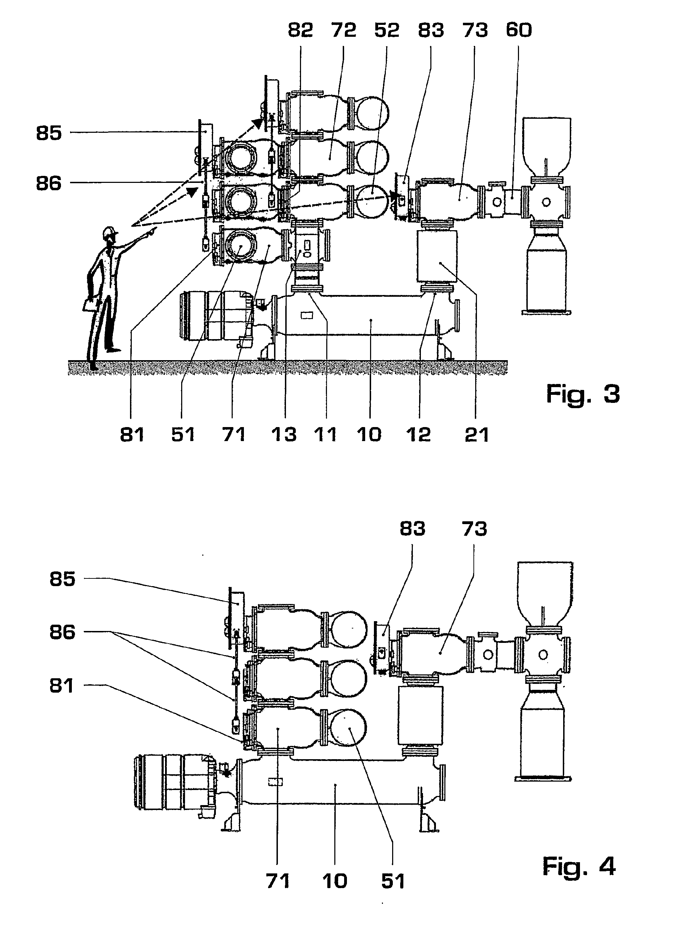

Mit dem Oberbegriff nimmt die Erfindung auf einen Stand der Technik von Schaltanlagen Bezug, wie er in EP 1 249 910 A2 oder in WO 00/45486 A (SIEMENS) beschrieben ist. In einer in Fig.3 dieses Dokuments beschriebenen Schaltanlage mit einer horizontal geführten Doppelsammelschiene ist ein erster Stromanschluss eines Leistungsschalters über einen ersten oder einen zweiten jeweils Trenn- und Erdungsfunktion aufweisenden Sammelschienentrenner wahlweise mit einer ersten oder einer zweiten Sammelschiene der Doppelsammelschiene verbindbar. Ein in Fig.4 beschriebenes Kuppelfeld weist ebenfalls eine horizontal geführte Doppelsammelschiene auf. Jeder der beiden Stromanschlüsse des Leistungsschalters ist jeweils über einen Trenn- und Erdungsfunktionen aufweisenden Sammelschienentrenner mit lediglich einem Antrieb an eine der beiden Sammelschienen der Doppelsammelschiene geführt. Der Sammelschienentrenner weist eine Vorrichtung zum Erden eines der beiden Stromanschlüsse des Leistungsschalters auf. Er enthält ferner eine Vorrichtung zum Trennen einer der beiden Sammelschienen vom erdbaren Stromanschluss. Bei allen diesen Anlagen werden so separate Antriebe für die Erdungs- und für die Sammelschienentrenn- und Verbindungsfunktion durch einen einzigen Antrieb ersetzt. Aufgrund der Anordnung der Sammelschienen werden für jede Phase allerdings unterschiedlich ausgebildete Sammelschienentrenner benötigt.

Solche Schaltgeräte sind beispielsweise aus Hitachi Review Vol. 51 (2002) No.5 S.169 bis 173 oder aus EP 1 068 624 B1 bekannt. Die in diesen Vorveröffentlichungen beschriebenen Schaltgeräte für gasisolierte, metallgekapselte Schaltanlagen weisen jeweils einen Dreistellungsschalter auf, der mit einem einzigen Antrieb alle Funktionen eines Trenn- und eines Erdungsschalters ausführen kann. Hierbei wird ein in einem Kapselungsgehäuse angeordnetes, bewegliches Kontaktelement längs einer Achse verschoben, welche Achse durch einen Trenner- und durch einen Erdungskontakt geführt ist. Mit einer linearen Bewegung des Kontaktelements können so drei Schaltstellungen des Schaltgerätes erreicht werden. In einer ersten dieser drei Positionen ist das Kontaktelement weder mit dem Trenner- noch mit dem Erderkontakt in Eingriff (neutrale Position), d. h. sowohl ein ins Schaltgerät integrierter Winkeltrenner als auch ein ins Schaltgerät integrierter Erder sind geöffnet. In einer zweiten Position greift das Kontaktelement in den Trennerkontakt ein. Die Trennschaltstelle des Trenners ist nun bei geöffnetem Erder geschlossen. In der dritten Position greift das Kontaktelement in den Erdungskontakt ein. Der Erder ist nun bei geöffnetem Trenner geschlossen.

Antriebskraft für das bewegliche Kontaktelement wird quer zu dessen Bewegungsrichtung übertragen. Dazu benötigt das Kapselungsgehäuse quer zur Achse zusätzlich Raum (Hitachi Review) oder es wird ein speziell ausgeführter und ein Hebelgetriebe aufnehmender Stromleiter benötigt (EP 1 068 624 B1).

### DARSTELLUNG DER ERFINDUNG

Die Erfindung, wie sie im unabhängigen Patentanspruch definiert ist, löst die Aufgabe, eine Schaltanlage der eingangs genannten Art anzugeben, welche sich durch eine kompakte Bauweise bei gleichzeitig grossem Bedienkomfort auszeichnet.

Bei der Schaltanlage nach der Erfindung sind die Kombitrenner derart ausgerichtet, dass mindestens zwei zu deren Betätigung vorgesehene Antriebsvorrichtungen in die gleiche Richtung weisen. Mit den Kombitrennern verbundene Abschnitte der Anlage sind in entgegengesetzter Richtung angeordnet. Aus diesen Gründen kann das Gehäuse des Leistungsschalters verkürzt und die Anlage kompakt und übersichtlich ausgebildet werden. Sind die Antriebe zu einem Bediengang der Anlage hin ausgerichtet, so sind die Positionen der Antriebe und damit auch die Schaltstellungen der Kombitrenner dem Bediener der Anlage visuell zugänglich. Es wird so gute Betriebssicherheit und hoher Bedienkomfort der Anlage erreicht. Diese vorteilhafte Wirkungen treten bereits auf, wenn die Anlage lediglich mit einer Einfachsammelschiene ausgerüstet ist.

Die Schaltanlage kann einphasig gekapselt oder dreiphasig oder allgemein mehrphasig gekapselt sein. Mit Vorteil ist jeweils für drei Phasen eine gemeinsame Antriebsvorrichtung vorhanden. Es kann auch für jede Phase jeweils eine eigene Antriebsvorrichtung vorhanden. Eine Antriebsvorrichtung umfasst mindestens eine Antriebseinheit, die Kraft auf mindestens ein Schaltgerät überträgt. Insbesondere kann die Antriebsvorrichtung Gestänge oder Kraftübertragungselemente umfassen, welche die Kraft von einer zentralen Antriebseinheit auf die der Anzahl Phasen entsprechende Anzahl Schaltgeräte übertragen.

Bevorzugt weisen alle Antriebsvorrichtungen in die gleiche Richtung. Besonders bevorzugt weisen die Antriebsvorrichtungen in die gleiche, vorwiegend horizontale Richtung. Der Leistungsschalter ist typischerweise horizontal ausgerichtet. Mit Vorteil sind die Kombitrenner gleichartig ausgebildet. Die gleichartige Ausbildung betrifft insbesondere die Form des Gehäuses oder Trennergehäuses mit den zugehörigen Anschlussöffnungen oder Anschlussflanschen, umfasst jedoch nicht notwendigerweise eine identische Ausstattung der Kombitrenner im Inneren hinsichtlich ihrer Stromführungs- und Stromunterbrechungselemente.

Enthält die Schaltanlage ein Querkuppelfeld, weist sie also zusätzlich eine vorwiegend horizontal geführte zweite Sammelschiene auf und trägt ein Gehäuse des zweiten Kombitrenners ein Gehäuse dieser zweiten Sammelschiene, dann ist es vorteilhaft, die Trennergehäuse und die von den Trennergehäusen getragenen Sammelschienen in vertikaler Richtung gegeneinander versetzt anzuordnen. Unter Beibehalt einer kompakten Ausbildung der Schaltanlage ist so auch im Querkuppelfeld eine gute Sichtbarkeit der Antriebe und damit der Schaltstellungen der Kombitrenner sichergestellt.

Enthält die Schaltanlage nach der Erfindung eine Doppelsammelschiene, ist also ebenfalls eine dritte vorwiegend horizontal geführte Sammelschiene vorgesehen, welche jedoch über einen dritten Kombitrenner mit dem ersten Stromanschluss verbindbar ist, so trägt ein Gehäuse des ersten Kombitrenners einen Abschnitt der ersten Sammelschiene und ein Gehäuse des dritten Kombitrenners einen Abschnitt der dritten Sammelschiene. Bevorzugt sind der erste und dritte Kombitrenner gleichartig ausgebildet. Sind beide Trennergehäuse über ein Modul miteinander verbunden, welches einen Verbindungsknoten des ersten Stromanschlusses enthält, dann sollten zweckmässigerweise die Gehäuse des ersten und des dritten Kombitrenners und die von diesen Gehäusen getragenen Sammelschienen in vertikaler Richtung gegeneinander versetzt angeordnet sein. Da die Antriebe nicht beidseitig von den Sammelschienen wegstehen, können die Sammelschienen unabhängig von den Abmessungen des Gehäuses des Leistungsschalters zusammengeführt werden, wodurch die Anlage äusserst kompakt wird. Trotz dieses hohen Grades an Kompaktheit bleibt die gute Sichtbarkeit der Antriebe und damit auch der Schalterpositionen gewährleistet.

Die Kombitrenner sind jeweils als Winkeltrenner ausgeführt. Mindestens der erste beider Schenkel des Winkels ist vorwiegend horizontal angeordnet und weist in koaxialer Anordnung einen Erdungskontakt, einen durch den Erdungskontakt geführten Antrieb und zwei Kontakte eines Trenners auf. Die vorstehend beschriebenen Vorteile können so in besonders wirtschaftlicher Weise erreicht werden. Es wird dann nämlich nur noch ein einziger Schalter für die Funktionen Trennen und Erden benötigt. Unterschiedliche Schalter, wie insbesondere Längstrenner, sind dann entbehrlich.

Wird beim zweiten und beim dritten Kombitrenner der zweite Schenkel des Winkels jeweils vorwiegend vertikal und beim ersten Kombitrenner vorwiegend horizontal geführt, so kann die in der Anlage mit Doppelsammelschiene vorgesehene dritte Sammelschiene besonders raumsparend mit dem dritten Kombitrenner verschaltet werden. An den zweiten Schenkel des ersten Kombitrenners ist dann die in Richtung dieses Schenkels erstreckte erste Sammelschiene und an den ersten Schenkel des dritten Kombitrenners die senkrecht zu diesem Schenkel ausgerichtete dritte Sammelschiene angesetzt.

Mit Vorteil enthält ein beweglich ausgeführter beider Trennerkontakte zwei mit einem Haltekörper verbundene Kontaktteile, von denen ein erstes den Gegenkontakt eines den Erdungskontakt enthaltenden Erders und ein zweites den Gegenkontakt eines feststehenden Kontakts des Trenners bildet. Diese Massnahmen ermöglichen es, mit nur einem einzigen Basisschaltgerät drei Schaltgeräte mit den Funktionen Trennen und Erden, nur Trennen oder nur Erden zu bilden. Sind die Kontaktteile lösbar mit dem Haltekörper verbunden, erfolgt die Umrüstung zwischen den drei Schaltgeräten durch Öffnen oder Schliessen höchstens zweier lösbarer Verbindungen. Trägt der Haltekörper beide Kontaktteile, so ist das Schaltgerät als kombinierter Trenn- und Erdungsschalter (Kombitrenner) ausgebildet. Es können dann in einer gasisolierten, gekapselten Schaltanlage die Funktionen Trennen und Erden mit einem Schaltgerät ausgeführt werden, das lediglich einen einzigen Antrieb aufweist. Allerdings bedingt dies, dass Trenn- und Erdungsstelle in der Anlage eng benachbart sind. Liegen Trenn- und Erdungsstelle weit voneinander entfernt und ist nur eine Erdungs- oder Trennaufgabe zu lösen, so braucht nur eines der Kontaktrohre nach Öffnen einer der beiden lösbaren Verbindungen entfernt zu werden, um so ein Schaltgerät mit Trenner- oder Erderfunktion zu schaffen. Daher können in gasisolierten, gekapselten Schaltanlage die elektrischen Funktionen Trennen und Erden, nur Trennen oder nur Erden mit einem einzigen Schaltgerätetyp abgedeckt werden. Es werden so die Kosten für Lagerhaltung und Montage der Anlage reduziert.

Das bei der erfindungsgemässen Anlage mit Doppelsammelschiene vorgesehene und den Verbindungsknoten enthaltende Knotenmodul ist mit Vorteil als T ausgebildet und derart in die Anlage eingebaut, dass die Arme des T vertikal ausgerichtet sind und eine vorwiegend vertikale Längsverbindung bilden, dass der Fuss des T eine vorwiegend horizontale Querverbindung bildet, und dass das Modul des ersten Kombitrenners am horizontal geführten Fuss des T und das Modul des dritten Kombitrenners am nach oben geführten Arm des T mit dem Knotenmodul verbunden ist. Dieses Knotenmodul ermöglicht den Einbau des ersten und des dritten Kombitrenners und verbessert in einfacher Weise durch die Höhenversetzung der ersten und der dritten Kombitrenner sowie der beiden Sammelschienen die Sichtbarkeit der Schalterpositionen und die Revidierbarkeit der Anlage. Zugleich können durch dieses Kapselungsmodul die Gasräume des ersten und des dritten Kombitrenners gegeneinander abgeschottet werden, so dass die Revidierbarkeit der Anlage zusätzlich verbessert wird. Das Gehäuse des Knotenmoduls kann T- oder X-förmig ausgebildet sein, unabhängig davon weist jedoch der von Stromleitern gebildete Verbindungsknoten T-Form auf.

Weist die erfindungsgemässe Anlage zwei oder mehr gekapselte Phasen auf, die insbesondere einphasig oder mehrphasig gekapselt sind, so empfiehlt es sich, in allen Phasen die Kombitrenner und gegebenenfalls vorgesehene und lediglich als Trenner oder lediglich als Erder wirkende weitere Schaltgeräte gleichartig auszubilden und/oder auszurichten. Die Gestehungs- und Wartungskosten der erfindungsgemäss Anlage können dann wesentlich reduziert werden. Dies lässt sich unter gleichzeitigem Einsparen von Platz in besonders vorteilhafter Weise dadurch erreichen, dass in unterschiedlichen Phasen angeordnete, aber gleichartige Funktionen erfüllende Schaltgeräte auf einer durch die vertikale und horizontale Richtung bzw. Beabstandung bestimmten Diagonalen angeordnet sind. Auf dieser Diagonalen können entsprechend Gestänge angeordnet sein, welche Kraft von einer zentralen Antriebseinheit auf die der Anzahl der Phasen entsprechende Anzahl an Schaltgeräten überträgt.

Weitere Ausführungen, Vorteile und Anwendungen der Erfindung ergeben sich aus den abhängigen Ansprüchen, aus den Anspruchskombinationen und aus der nun folgenden Beschreibung und den Figuren.

### BESCHREIBUNG DER ZEICHNUNGEN

Die Erfindung wird nachstehend anhand von Ausführungsbeispielen erläutert. Es zeigen:
- Fig. 1: eine Seitenansicht einer dreiphasigen, einphasig gekapselten Schaltanlage nach dem Stand der Technik mit einer Doppelsammelschiene,
- Fig. 2: ein lediglich für eine Phase dargestelltes Schaltschema der Anlage nach Fig.1,
- Fig. 3: eine Seitenansicht einer die gleichen Funktionen wie die Anlage nach Fig.1 erfüllenden Schaltanlage nach der Erfindung,
- Fig.4: eine Seitenansicht einer eine Einfachsammelschiene aufweisenden Ausführungsform der Schaltanlage nach der Erfindung,
- Fig.5: eine Seitenansicht eines als Querkuppelfeld ausgeführten Abschnitts einer Ausführungsform der Schaltanlage nach der Erfindung,
- Fig.6: eine Querschnittsdarstellung durch einen in der Schaltanlage nach Fig.3 eingesetzten Kombitrenner 71, und
- Fig.7, 8: zwei GIS-Konfigurationen mit Doppelsammelschiene in Seitenansicht für eine dreiphasig gekapselte Schaltanlage nach der Erfindung.

In allen Figuren bezeichnen gleiche Bezugszeichen auch gleichwirkende Teile.

### WEGE ZUR AUSFÜHRUNG DER ERFINDUNG

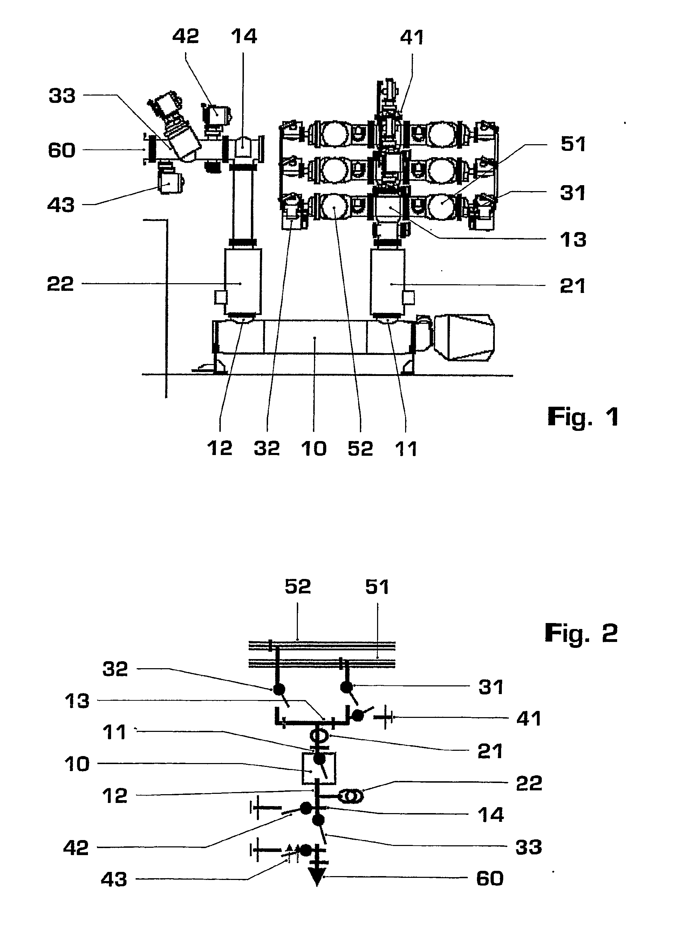

Die in Fig.1 dargestellte dreiphasig ausgeführte Schaltanlage nach dem Stand ist Technik ist einphasig gekapselt ausgeführt und weist für jede ihrer drei Phasen eine separate isoliergasgefüllte Metallkapselung auf. Jede Kapselung ist modular aufgebaut und weist das aus Fig.2 ersichtliche Schaltschema auf, in dem mit dem Bezugszeichen 10 ein zwei Stromanschlüsse 11, 12 aufweisender Leistungsschalter bezeichnet ist. Ersichtlich ist der Stromanschluss 11 an einen von einem Stromwandler 21 überwachten Verbindungsknoten 13 und der Stromanschluss 12 an einen von einem Spannungswandler 22 überwachten Verbindungsknoten 14 angeschlossen. An den Verbindungsknoten 13 sind ferner zwei Sammelschienentrenner 31, 32 sowie ein Erder 41 und an den Verbindungsknoten 14 ein Trenner 33 und ein Erder 42 angeschlossen. Die vom Verbindungsknoten 13 abgewandten Anschlüsse der Sammelschienentrenner 31, 32 sind jeweils mit einer von zwei horizontal geführten Sammelschienen 51, 52 verbunden, wohingegen der vom Verbindungsknoten 14 abgewandte Anschluss des Trenners 33 mit einem Erder 43 und einem Abgang 60 oder einer weiteren Sammelschiene verbunden ist.

Aus der in Fig.1 angegebenen Topologie der Anlage ist zu ersehen, dass der Leistungsschalter 10 als liegend angeordnetes Kapselungsmodul ausgeführt ist und ein Schaltergehäuse mit zwei die Stromanschlüsse 11 und 12 repräsentierenden Flanschansätzen aufweist. Auf den dem Stromanschluss 11 zugeordneten Flanschansatz ist ein den Stromwandler 21 enthaltendes, vertikal geführtes Kapselungsmodul befestigt. Dieses Stromwandlermodul 21 trägt ein den Verbindungsknoten 13 aufnehmendes, T-förmig ausgebildetes Modul. An jedem der beiden Arme des T dieses Knotenmoduls 13 ist jeweils ein den Trenner 31 bzw. 32 enthaltendes Modul angesetzt. Die beiden Trennermodule 31 und 32 und die mit den Trennern verbundenen Sammelschienen 51 und 52 sind daher auf gleicher Höhe angeordnet. Der Erder 41 ist am oberen Ende des Knotenmoduls 13 angeordnet. Auf den dem Stromanschluss 12 zugeordneten Flanschansatz ist ein den Spannungswandler 22 enthaltendes, vertikal geführtes Modul befestigt. Dieses Spannungswandlermodul 22 trägt in säulenartiger Anordnung ein nicht bezeichnetes Zwischenmodul und ein den Verbindungsknoten 14 aufnehmendes L-förmig ausgebildetes Modul. An einem horizontal ausgerichteten Flanschansatz des Knotenmoduls 14 ist ein horizontal geführtes Kapselungsmodul des Trenners 33 befestigt. Der dem Erden des Verbindungsknoten 14 dienende Erdungsschalter 42 ist am schalterseitigen Ende des Trennermoduls 33, der dem Erden des Abgangs 60 dienende Erder 43 ist am abgangseitigen Ende des Trennermoduls 33 angeordnet.

In der in Fig. 3 dargestellten Schaltanlage nach der Erfindung ist die gleiche Schaltung realisiert wie in der Schaltanlage gemäss Fig.1, jedoch weist diese eine andere Topologie auf. Dies ist zum einen dadurch bestimmt, dass anstelle der drei Trenner 31, 32 und 33 und zwei Erder 41 und 42 mit insgesamt fünf Antrieben lediglich drei Schaltgeräte mit Trenn- und Erdungsfunktion (Kombitrenner 71, 72, 73) eingesetzt sind, die jeweils nur noch einen einzigen Antrieb 81, 82, 83 zur Ausübung beider Funktionen benötigen. Zum anderen ist diese andere Topologie auch dadurch bedingt, dass die Kombitrenner 71, 72, 73 derart ausgerichtet sind, dass die drei zu deren Betätigung vorgesehene Antriebe 81, 82, 83 in die gleiche, hier vorwiegend horizontale Richtung weisen. Darüberhinaus sind auch die Trennermodule 71, 72 und die von ihnen getragenen Sammelschienen 51 und 52 in vertikaler Richtung gegeneinander versetzt angeordnet.

Durch Verwendung der Kombitrenner wird die Anzahl der Antriebe von fünf auf drei reduziert. Anstelle von verschiedenartigen Typen von Schaltern, wie Trennern und Erdern, wird der Kombitrenner nur noch als einziges Schaltgerät zur Lösung von Trenn- und Erdungsaufgaben eingesetzt. Dementsprechend wird nur noch ein einziger Antriebstyp benötigt, wobei dieser Typ einen zentralen Antriebskopf 85 und Verbindungsgestänge 86 für den Antrieb zwischen den Phasen aufweist. Diese Teile stimmen ersichtlich mit den entsprechenden Teilen des Antriebs 82 überein. Um eine kompakte Anordnung zu ermöglichen, sind ersichtlich die Sammelschienen 51 resp. 52 unterschiedlicher Phasen vertikal übereinander angeordnet. Die in den drei Phasen vorgesehenen, aber gleichartige Funktionen erfüllenden Kombitrenner, z.B. 71 oder 72, sind auf einer durch die vertikale und horizontale Richtung bzw. Beabstandung bestimmten Diagonalen angeordnet und durch das längs dieser Diagonalen geführte Gestänge 86 miteinander verbunden. In allen drei Phasen sind die Kombitrenner 71, 72, 73 ersichtlich vorteilhafterweise gleichartig ausgebildet und/oder ausgerichtet. Dies gilt auch für gegebenenfalls vorgesehene und lediglich als Trenner oder lediglich als Erder ausgebildete weitere Schaltgeräte.

Die einheitliche Ausrichtung der Kombitrenner 71, 72, 73 in vorwiegend horizontaler Richtung ermöglicht es, dass alle Antriebe 81, 82, 83 und damit auch ihre Positionsanzeigen zu einem Bediengang der Anlage hin orientiert sind. Vom Bediengang aus kann die Anlage daher viel einfacher kontrolliert und gewartet werden. Auch dies ist aus Fig.3 zu ersehen. Da die Antriebe 71 und 72 nach einer Seite ausgerichtet sind und nicht wie die Antriebe der Trenner 31 und 32 beidseitig von den Sammelschienen 51 und 52 wegstehen, wird zudem Platz eingespart. Die erfindungsgemässen Vorteile werden auch schon erreicht, wenn zumindest zwei Einzelantriebe von an unterschiedlichen Orten eingebauten Kombitrennern in die gleiche, typischerweise horizontale Richtung weisen.

Aus Fig.3 kann auch entnommen werden, dass die Sichtbarkeit der Antriebe und der mit ihnen verbundenen Positionsanzeigen dadurch noch zusätzlich verbessert wird, wenn die Kombitrenner 71, 72, 73 und die von den Kombitrennern 71 und 72 getragenen Sammelschienen 51 und 52 in vertikaler Richtung gegeneinander versetzt angeordnet sind.

Im Unterschied zu den zuvor gezeigten Ausführungsformen mit der Doppelsammelschiene weist die in Fig.4 dargestellte Schaltanlage lediglich die horizontal geführte Sammelschiene 51 auf, welche vom Gehäuse des Kombitrenners 71 getragen wird. Dadurch, dass die Antriebe der Kombitrenner, nämlich der Antriebe 81 des sammelschienenseitig vorgesehenen Kombitrenners 71 und der Antrieb 83 des abgangseitig vorgesehenen Kombitrenners 73, in horizontaler Richtung geführt sind und in die gleiche Richtung weisen, werden auch bei dieser Schaltanlage mit Einfachsammelschiene der Bedienkomfort und die Zugänglichkeit erheblich verbessert.

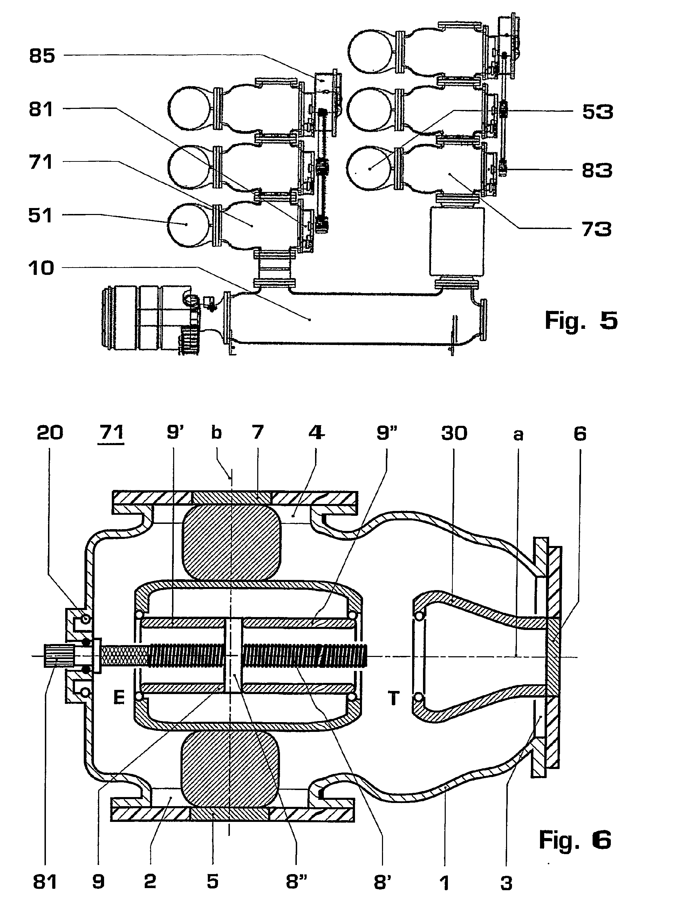

Auch bei dem in Fig.5 dargestellten Querkuppelfeld einer Ausführungsform der Schaltanlage nach der Erfindung sind der Bedienkomfort und die Zugänglichkeit hervorragend. Dadurch, dass die beiden Sammelschienen 51 und 53 und entsprechend auch die beiden Kombitrenner 71 und 73 vertikal gegeneinander versetzt angeordnet sind, sind die Antriebe 81 und 83 besonders gut sichtbar und besonders gut zugänglich. Durch die Ausrichtung der Antriebe 81 und 83 in eine Richtung wird zugleich Platz eingespart. Zugleich wird hierbei die Zahl der benötigten Schaltgeräte mit Trenner- und/oder Erderfunktion halbiert.

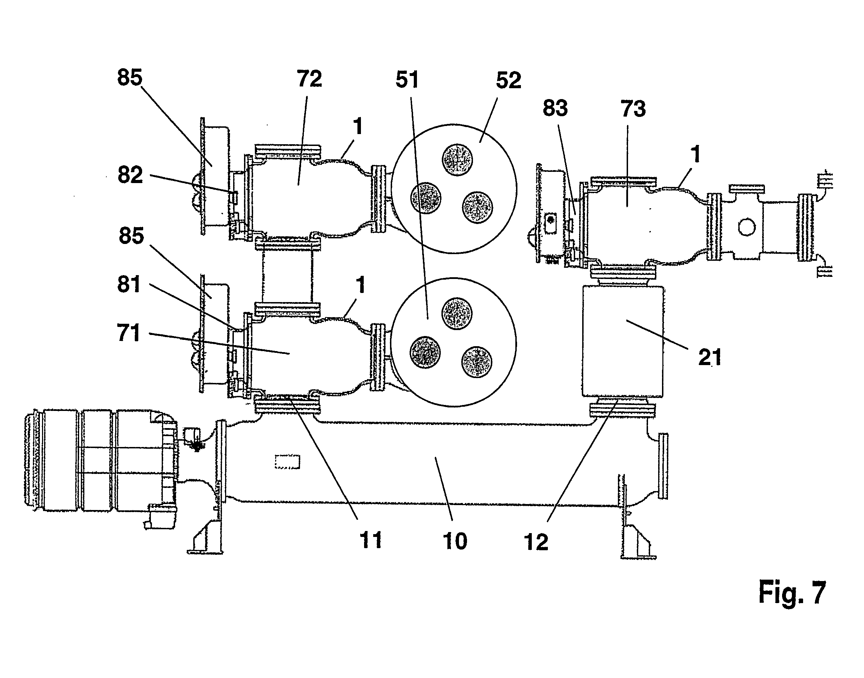

In Fig.6 ist der Kombitrenner 71 dargestellt, so wie er in der Schaltanlage nach Fig.3-5 oder auch Fig. 7-8 eingebaut ist. Es sei auf die europäische Prioritätsanmeldung verwiesen, die hiermit mit ihrem gesamten Offenbarungsgehalt in die Beschreibung aufgenommen ist. Der Kombitrenner 71 oder auch 72 und 73 weist ein isoliergasgefülltes metallenes Gehäuse 1 auf mit drei Öffnungen 2, 3 und 4, welche jeweils von einem nicht bezeichneten Flansch begrenzt sind. Die Flansche dienen jeweils der Verbindung mit einem nicht dargestellten Gegenflansch des anschliessenden Moduls der Schaltanlage. Die Öffnungen 2 bis 4 sind jeweils durch einen nicht bezeichneten Schottungsisolator gasdicht abgeschlossen, der gegenüber dem Gehäuse 1 elektrisch isoliert jeweils einen mit Hochspannung beaufschlagbaren Stromleiter 5, 6 und 7 trägt.

Zentral durch die Öffnung 3 führt eine vorwiegend horizontale Achse a, welche die Bewegungsrichtung eines durch einen Gewindespindel 8' und eine Spindelmutter 8" verschiebbaren Kontaktelements 9 des Schaltgerätes bestimmt, und entlang welcher der Stromleiter 6 von aussen ins Innere des Gehäuses 1 geführt ist. Die Öffnungen 2 und 4 stehen einander im Gehäuse 1 derart gegenüber, dass die Stromleiter 5 und 7 längs einer zentral durch die Öffnungen geführten Linie b ausgerichtet sind. Achse a und Linie b schliessen miteinander einen rechten Winkel ein und bestimmen so die Geometrie eines die Stromleiter 5 und 6 enthaltenden Strompfades. Auf der Achse angeordnet sind neben dem Leiter 6 und dem beweglichen Kontaktelement 9 auch ein Erdungskontakt 20 und ein mit dem Stromleiter 6 verbundener Trennerkontakt 30.

Der Stromleiter 5 ist mit einem nach rechts geführten Abschnitt der Sammelschiene 51, der Stromleiter 7 mit einem nach links geführten Abschnitt der Sammelschiene 51 und der Stromleiter 6 mit dem Verbindungsknoten 13 verbunden. Ersichtlich ist der Kombitrenner 71 als Winkeltrenner ausgeführt und sind beide Schenkel des Winkels vorwiegend horizontal in der Anlage angeordnet. Der bewegliche Kontakt 9 weist zwei mit einem nicht bezeichneten Haltekörper verbundene, insbesondere lösbar verbundene oder fest verbundene oder gar einteilige, Kontaktteile 9'. 9"auf, von denen ein erstes 9' den Gegenkontakt eines den Erdungskontakt 20 enthaltenden Erders E und ein zweites 9" den Gegenkontakt eines feststehenden Kontakts eines Trenners T bildet. Durch Entfernen eines der Teile 9' oder 9" kann so aus dem Kombitrenner ein Schaltgerät nur mit Erderfunktion E oder nur mit Trennerfunktion T gebildet werden, welches entsprechend den Kombischaltern 71 bis 73 in die Anlage eingebaut werden kann.

Der Schalter 71 ist horizontal eingebaut. Die Schenkel des Winkels, nämlich die Achse a und die als Längsverbindung durch den Schalter geführte Sammelschiene 51, verlaufen horizontal. Hingegen sind die Schalter 72 und 73 vertikal eingebaut, da lediglich die Achse a horizontal geführt ist, die Linie b jedoch vertikal nach unten.

Das den Verbindungsknoten 13 enthaltende Knotenmodul ist als T ausgebildet und ist derart in die Anlage eingebaut, dass die Arme des T vertikal geführt sind und eine vorwiegend vertikale Längsverbindung bilden. Der Fuss des T bildet eine vorwiegend horizontale Querverbindung. Werden nun das Modul des Kombitrenners 72 am nach oben geführten Arm des T und das Modul des Kombitrenners 71 am horizontal geführten Fuss des T mit dem Knotenmodul 13 verbunden, so werden dadurch unmittelbar die horizontale Ausrichtung der Antriebsachsen a der Kombitrenner 71 und 72 und zugleich die vertikale Verschiebung der Trenner erreicht. Das Gehäuse des Knotenmoduls 13 kann Toder X-förmig ausgebildet sein, unabhängig davon weist jedoch der von Stromleitern gebildete Verbindungsknoten T-Form auf. Ist das Gehäuse des Knotenmoduls X-förmig ausgeführt, so kann eine der vier Öffnungen des X mit einem Deckel oder einer Berstscheibe verschlossen sein, kann aber mit Vorteil auch der Durchführung eines Sensors dienen.

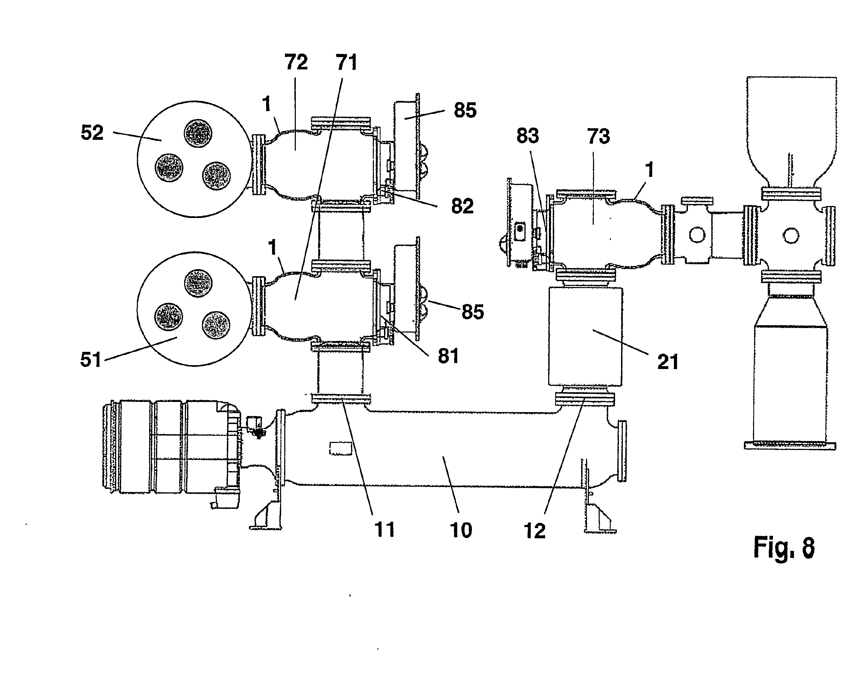

Fig.7 und Fig.8 zeigen zwei zu Fig.3 analoge Ausführungsbeispiele mit Doppelsammelschiene im Falle einer dreiphasig gekapselten Schaltanlage. In Fig. 7 sind die Antriebsvorrichtungen 81, 82 sowohl des ersten und dritten Kombitrenners 71, 72 als auch des zweiten, am Abgang angeordneten Kombitrenners 72 in die gleiche Richtung hin orientiert. Anders gesagt sind die Sammelschienentrenner 71, 73 und der Abgangstrenner 72 gleichartig orientiert oder ausgerichtet. Insbesondere haben die Sammelschienentrenner 71, 73 und der Abgangstrenner 72 gleichartige Gehäuse 1, insbesondere wie in Fig. 6 beschrieben, und sind in gleicher Orientierung eingebaut. In Fig. 8 sind die Sammelschienentrenner 71, 73 bzw. ihre Antriebsvorrichtungen 81, 82 gleichartig ausgerichtet, jedoch entgegengesetzt zum Abgangstrenner 72. Der Bedienkomfort, insbesondere die gemeinsame Ablesbarkeit bzw. Überwachbarkeit, wird hier für die Sammelschienentrenner 71, 73 alleine erreicht. In jedem Fall wird eine sehr kompakte Bauweise für eine gasisolierte Schaltanlage realisiert.

### BEZUGSZEICHENLISTE

- 1: Kapselungsgehäuse
- 2, 3, 4: Öffnungen
- 5, 6, 7: Stromleiter
- 8': Gewindespindel
- 8": Spindelmutter
- 9: Kontaktelement
- 9', 9": Kontaktteile
- 10: Leistungsschalter
- 11, 12: Stromanschlüsse
- 13, 14: Verbindungsknoten, Knotenmodul
- 20: Erdungskontakt
- 21: Stromwandler
- 22: Spannungswandler
- 30: Trennerkontakt
- 31, 32, 33: Trenner
- 41, 42, 43: Erder
- 51, 52, 53: Sammelschienen
- 60: Abgang
- 71, 72, 73: Kombitrenner
- 81, 82, 83: Antriebe
- 85: Antriebskopf, zentraler Antriebskopf
- a: Achse
- b: Linie
- E: Erder
- T: Trenner

## Patentansprüche

1. Gekapselte gasisolierte Schaltanlage in Modulbauweise, enthaltend mindestens eine vorwiegend horizontal geführte erste Sammelschiene (51), einen Leistungsschalter (10) mit zwei Stromanschlüssen (11, 12), von denen ein erster (11) mit der ersten Sammelschiene (51) verbind bar ist, und mindestens zwei Trenn- und Erdungsfunktion aufweisende Kombitrenner (71, 72, 73), von denen ein erster (71) zwischen die erste Sammelschiene (51) und den ersten Stromanschluss (11) und der zweite (73) zwischen einen Abgang (60) oder eine vorwiegend horizontal geführte zweite Sammelschiene (53) der Schaltanlage und den zweiten Stromanschluss (12) des Leistungsschalters (10) geschaltet ist, wobei ein Gehäuse (1) des ersten Kombitrenners (71) einen Abschnitt der ersten Sammelschiene (51) trägt, **dadurch gekennzeichnet, dass** die Gehäuse (1) der Kombitrenner (71, 72, 73) derart ausgerichtet sind, dass mindestens zwei zu deren Betätigung vorgesehene Antriebsvorrichtungen (81, 82, 83) in die gleiche Richtung weisen.

2. Schaltanlage nach Anspruch 1, **dadurch gekennzeichnet, dass** die Schaltanlage einphasig gekapselt oder dreiphasig gekapselt ist.

3. Schaltanlage nach einem der vorangehenden Ansprüche, **dadurch gekennzeichnet, dass** jeweils für drei Phasen eine gemeinsame Antriebsvorrichtung (81, 82, 83) vorhanden ist oder jeweils für jede Phase eine eigene Antriebsvorrichtung vorhanden ist.

4. Schaltanlage nach einem der vorangehenden Ansprüche, **dadurch gekennzeichnet, dass** alle Antriebsvorrichtungen (81, 82, 83) in die gleiche Richtung weisen.

5. Schaltanlage nach einem der vorangehenden Ansprüche, **dadurch gekennzeichnet, dass** die Antriebsvorrichtungen (81, 82, 83) in die gleiche, vorwiegend horizontale Richtung weisen.

6. Schaltanlage nach einem der vorangehenden Ansprüche, **dadurch gekennzeichnet, dass** der Leistungsschalter (10) horizontal ausgerichtet ist.

7. Schaltanlage nach einem der vorangehenden Ansprüche, **dadurch gekennzeichnet, dass** die Kombitrenner (71, 72, 73) gleichartig ausgebildet sind.

8. Schaltanlage nach einem der vorangehenden Ansprüche, **dadurch gekennzeichnet, dass** das Gehäuse (1) des zweiten Kombitrenners (73) einen Abschnitt der zweiten Sammelschiene (53) trägt, und dass die Gehäuse (1) und die von ihnen getragenen Sammelschienen (51, 53) in vertikaler Richtung gegeneinander versetzt angeordnet sind.

9. Schaltanlage nach einem der vorangehenden Ansprüche, **dadurch gekennzeichnet, dass** mindestens eine vorwiegend horizontal geführte dritte Sammelschiene (52) vorgesehen ist, welche über einen dritten Kombitrenner (72) mit dem ersten Stromanschluss (11) verbindbar ist, und dass ein Gehäuse (1) des ersten Kombitrenners (71) einen Abschnitt der ersten Sammelschiene (51) und ein Gehäuse (1) des dritten Kombitrenners (72) einen Abschnitt der dritten Sammelschiene (52) trägt.

10. Schaltanlage nach Anspruch 9, **dadurch gekennzeichnet, dass** der dritte Kombitrenner (72) gleichartig wie der erste Kombitrenner (71) ausgebildet ist.

11. Schaltanlage nach einem der Ansprüche 9-10, **dadurch gekennzeichnet, dass** beide Gehäuse (1) über ein Modul miteinander verbunden sind, welches einen Verbindungsknoten (13) des ersten Stromanschlusses (11) enthält, und dass die Gehäuse (1) des ersten Kombitrenners (71) und des dritten Kombitrenners (72) und die von diesen Gehäusen (1) getragenen Sammelschienen (51, 52) in vertikaler Richtung gegeneinander versetzt angeordnet sind.

12. Schaltanlage nach Anspruch 11, **dadurch gekennzeichnet, dass** das den Verbindungsknoten (13) enthaltende Modul als T ausgebildet und derart in die Anlage eingebaut ist, dass die Arme des T vertikal ausgerichtet sind und eine vorwiegend vertikale Längsverbindung bilden, dass der Fuss des T eine vorwiegend horizontale Querverbindung bildet, und dass das Modul des ersten Kombitrenners (71) am horizontal geführten Fuss des T und das Modul des dritten Kombitrenners (72) am nach oben geführten Arm des T mit dem Knotenmodul (13) verbunden ist.

13. Schaltanlage nach einem der vorangehenden Ansprüche, **dadurch gekennzeichnet, dass** die Kombitrenner (71, 72, 73) jeweils als Winkeltrenner ausgeführt sind, wobei mindestens der erste (a) beider Schenkel (a, b) des Winkels vorwiegend horizontal angeordnet ist und in koaxialer Anordnung einen Erdungskontakt (20), einen durch den Erdungskontakt geführten Antrieb (81) und zwei Kontakte (9, 30) eines Trenners enthält.

14. Schaltanlage nach einem der vorangehenden Ansprüche, **dadurch gekennzeichnet, dass** einer der zwei Trennerkontakte (9) beweglich ausgeführt ist und zwei mit einem Haltekörper verbundene Kontaktteile (9', 9") enthält, von denen ein erstes (9') den Gegenkontakt eines den Erdungskontakt (20) enthaltenden Erders (E) und ein zweites (9") den Gegenkontakt eines feststehenden Kontakts (30) des Trenners (T) bildet.

15. Schaltanlage nach einem der Ansprüche 13 oder 14, **dadurch gekennzeichnet, dass** der zweite Schenkel (b) des Winkels vertikal oder horizontal geführt ist.

16. Schaltanlage nach einem der vorangehenden Ansprüche mit zwei oder mehr gekapselten Phasen, **dadurch gekennzeichnet, dass** in allen Phasen die Kombitrenner (71, 72, 73) und gegebenenfalls vorgesehene und lediglich als Trenner oder lediglich als Erder ausgebildete weitere Schaltgeräte gleichartig ausgebildet sind.

17. Schaltanlage nach einem der vorangehenden Ansprüche mit zwei oder mehr gekapselten Phasen, **dadurch gekennzeichnet, dass** in allen Phasen die Kombitrenner (71, 72, 73) und gegebenenfalls vorgesehene und lediglich als Trenner oder lediglich als Erder ausgebildete weitere Schaltgeräte gleichartig ausgerichtet sind.

18. Schaltanlage nach einem der Ansprüche 16-17, **dadurch gekennzeichnet, dass** in unterschiedlichen Phasen angeordnete, aber gleichartige Funktionen erfüllende Schaltgeräte auf einer durch die vertikale und horizontale Beabstandung bestimmten Diagonalen angeordnet sind.

## Claims

1. An encapsulated gas-insulated switchgear assembly having a modular design, containing at least one first busbar (51), which is guided predominantly horizontally, a circuit breaker (10) having two current terminals (11, 12), of which a first current terminal (11) can be connected to the first busbar (51) and at least two combined disconnecting-earthing switches (71, 72, 73) having a disconnection and grounding function, of which a first combined disconnecting-earthing switch (71) is connected between the first busbar (51) and the first current terminal (11) and the second combined disconnecting-earthing switch (73) is connected between an outgoing feeder (60) or a second busbar (53), which is guided predominantly horizontally, of the switchgear assembly and the second current terminal (12) of the circuit breaker (10), a housing (1) of the first combined disconnecting-earthing switch (71) supporting a section of the first busbar (51), **characterized in that** the housings (1) of the combined disconnecting-earthing switches (71, 72, 73) are aligned such that at least two drive apparatuses (81, 82, 83), which are provided for their actuation, point in the same direction.

2. The switchgear assembly as claimed in claim 1, **characterized in that** the switchgear assembly is single-phase-encapsulated or three-phase-encapsulated.

3. The switchgear assembly as claimed in one of the preceding claims, **characterized in that** a common drive apparatus (81, 82, 83) is provided in each case for three phases or a dedicated drive apparatus is provided in each case for each phase.

4. The switchgear assembly as claimed in one of the preceding claims, **characterized in that** all of the drive apparatuses (81, 82, 83) point in the same direction.

5. The switchgear assembly as claimed in one of the preceding claims, **characterized in that** the drive apparatuses (81, 82, 83) point in the same, predominantly horizontal direction.

6. The switchgear assembly as claimed in one of the preceding claims, **characterized in that** the circuit breaker (10) is aligned horizontally.

7. The switchgear assembly as claimed in one of the preceding claims, **characterized in that** the combined disconnecting-earthing switches (71, 72, 73) are of identical design.

8. The switchgear assembly as claimed in one of the preceding claims, **characterized in that** the housing (1) of the second combined disconnecting-earthing switch (73) supports a section of the second busbar (53), and **in that** the housings (1) and the busbars (51, 53) supported by them are arranged such that they are offset with respect to one another in the vertical direction.

9. The switchgear assembly as claimed in one of the preceding claims, **characterized in that** at least one third busbar (52) is provided which is guided predominantly horizontally and can be connected to the first current terminal (11) via a third combined disconnecting-earthing switch (72), and **in that** a housing (1) of the first combined disconnecting-earthing switch (71) supports a section of the first busbar (51), and a housing (1) of the third combined disconnecting-earthing switch (72) supports a section of the third busbar (52).

10. The switchgear assembly as claimed in claim 9, **characterized in that** the third combined disconnecting-earthing switch (72) has an identical design to the first combined disconnecting-earthing switch (71).

11. The switchgear assembly as claimed in one of claims 9-10, **characterized in that** the two housings (1) are connected to one another via a module, which contains a connection node (13) of the first current terminal (11), and **in that** the housings (1) of the first combined disconnecting-earthing switch (71) and the third combined disconnecting-earthing switch (72) and the busbars (51, 52) supported by these housings (1) are arranged such that they are offset with respect to one another in the vertical direction.

12. The switchgear assembly as claimed in claim 11, **characterized in that** the module containing the connection node (13) is in the form of a T and is installed in the assembly such that the arms of the T are aligned vertically and forme a predominantly vertical longitudinal connection, such that the base of the T forms a predominantly horizontal transverse connection, and such that the module of the first combined disconnecting-earthing switch (71) is connected to the node module (13) at the horizontally guided base of the T, and the module of the third combined disconnecting-earthing switch (72) is connected to the node module (13) at the upwardly guided arm of the T.

13. The switchgear assembly as claimed in one of the preceding claims, **characterized in that** the combined disconnecting-earthing switches (71, 72, 73) are each in the form of elbow disconnectors, at least the first (a) of the two limbs (a, b) of the elbow being arranged predominantly horizontally and containing, in a coaxial arrangement, a grounding contact (20), a drive (81) guided through the grounding contact and two contacts (9, 30) of a disconnector.

14. The switchgear assembly as claimed in one of the preceding claims, **characterized in that** one of the two disconnector contacts (9) is designed to be moveable and contains two contact parts (9', 9"), which are connected to a retaining element and of which a first contact part (9') forms the mating contact of a grounding device (E) containing the grounding contact (20) and a second contact part (9'') forms the mating contact of a stationary contact (30) of the disconnector (T).

15. The switchgear assembly as claimed in either of claims 13 and 14, **characterized in that** the second limb (b) of the elbow is guided vertically or horizontally.

16. The switchgear assembly as claimed in one of the preceding claims having two or more encapsulated phases, **characterized in that** the combined disconnecting-earthing switches (71, 72, 73) and further switching devices which may be provided and which are only in the form of disconnectors or only in the form of grounding devices are of identical design in all phases.

17. The switchgear assembly as claimed in one of the preceding claims having two or more encapsulated phases, **characterized in that** the combined disconnecting-earthing switches (71, 72, 73) and further switching devices which may be provided and which are only in the form of disconnectors or only in the form of grounding devices are aligned in identical fashion in all phases.

18. The switchgear assembly as claimed in one of claims 16-17, **characterized in that** switching devices which are arranged in different phases but perform identical functions are arranged on a diagonal determined by the vertical and horizontal spacing.

## Revendications

1. Installation de commutation isolée vis-à-vis des gaz et encapsulée dans une conception modulaire, contenant au moins une première barre collectrice (51) guidée principalement horizontalement, un sectionneur de puissance (10) avec deux branchements électriques (11, 12), dont un premier (11) peut être relié à la première barre collectrice (51), et au moins deux sectionneurs mixtes (71, 72, 73) présentant une fonction de sectionnement et une fonction de mise à la terre, dont un premier (71) est monté entre la première barre collectrice (51) et le premier branchement électrique (11) et le second (73) entre une sortie (60) ou une seconde barre collectrice (51), guidée principalement horizontalement de l'installation de commutation et le second branchement électrique (12) du sectionneur de puissance (10), un boîtier (1) du premier sectionneur mixte (71) portant une partie de la première barre collectrice (51), **caractérisée en ce que** les boîtiers (1) des sectionneurs mixtes (71, 72, 73) sont orientés de telle sorte qu'au moins deux dispositifs d'entraînements (81, 82, 83) prévus pour leur actionnement sont dirigés dans la même direction.

2. Installation de commutation selon la revendication 1, **caractérisée en ce que** l'installation de commutation est encapsulée avec une phase ou encapsulée avec trois phases.

3. Installation de commutation selon l'une quelconque des revendications précédentes, **caractérisée en ce que**, à chaque fois et pour trois phases, on a un dispositif d'entraînement (81, 82, 83) commun ou à chaque fois pour chaque phase un dispositif d'entraînement propre.

4. Installation de commutation selon l'une quelconque des revendications précédentes, **caractérisée en ce que** tous les dispositifs d'entraînement (81, 82, 83) sont dirigés dans la même direction.

5. Installation de commutation selon l'une quelconque des revendications précédentes, **caractérisée en ce que** les dispositifs d'entraînement (81, 82, 83) sont dirigés dans la même direction principalement horizontale.

6. Installation,de commutation selon l'une quelconque des revendications précédentes, **caractérisée en ce que** le sectionneur de puissance (10) est orienté horizontalement.

7. Installation de commutation selon l'une quelconque des revendications précédentes, **caractérisée en ce que** les sectionneurs mixtes (71, 72, 73) sont conçus de la même façon.

8. Installation de commutation selon l'une quelconque des revendications précédentes, **caractérisée en ce que** le boîtier (1) du second sectionneur mixte (73) porte une partie de la seconde barre collectrice (53) et **en ce que** les boîtiers (1) et les barres collectrices (51, 53) portées par eux sont disposés dans la direction verticale et décalés les unes par rapport aux autres.

9. Installation de commutation selon l'une quelconque des revendications précédentes, **caractérisée en ce qu'**au moins une troisième barre collectrice (52) guidée principalement horizontalement est prévue, laquelle peut être reliée par un troisième sectionneur mixte (72) au premier branchement électrique (11) et **en ce qu'**un boîtier (1) du premier sectionneur mixte (71) porte une partie de la première barre collectrice (51) et un boîtier (1) du troisième sectionneur mixte (72) une partie de la troisième barre collectrice (52).

10. Installation de commutation selon la revendication 9, **caractérisée en ce que** le troisième sectionneur mixte (72) est réalisé de la même façon que le premier sectionneur mixte (71).

11. Installation de commutation selon l'une quelconque des revendications 9 à 10, **caractérisée en ce que** les deux boîtiers (1) sont reliés entre eux par un module qui contient un noeud de liaison (13) du premier branchement électrique (11) et **en ce que** les boîtiers (1) du second sectionneur mixte (71) et du troisième sectionneur mixte (72) et les barres collectrices (51, 52) portées par ces boîtiers (1) sont disposés dans la direction verticale et décalés les uns par rapport aux autres.

12. Installation de commutation selon la revendication 11, **caractérisée en ce que** le module contenant le noeud de liaison (13) est conçu comme un T et est monté dans l'installation de telle sorte que les bras du T sont orientés verticalement et forment une liaison longitudinale principalement verticale, **en ce que** le pied du T forme une liaison transversale principalement horizontale et **en ce que** le module du premier sectionneur mixte (71) sur le pied guidé horizontalement du T et le module du troisième sectionneur mixte (72) sur le bras, guidé vers le haut, du T est relié au module de noeud (13).

13. Installation de commutation selon l'une quelconque des revendications précédentes, **caractérisée en ce que** les sectionneurs mixtes (71, 72, 73) sont conçus chacun comme des sectionneurs d'angle, au moins la première (a) des deux branches (a, b) de l'angle étant disposée principalement horizontalement et contenant dans l'agencement coaxial un contact de mise à la terre (20), un entraînement (81) guidé par le contact de mise à la terre et deux contacts (9, 30) d'un sectionneur.

14. Installation de communication selon l'une quelconque des revendications précédentes, **caractérisée en ce que** l'un des deux contacts sectionneurs (9) est réalisé de façon mobile et contient deux parties de contact (9', 91") reliées à un corps de soutien, parties dont une première (9') forme le contre-contact d'une prise de terre (E) contenant le contact de mise à la terre (20) et une seconde (9") forme le contre-contact d'un contact (30) fixe du sectionneur (T).

15. Installation de commutation selon l'une quelconque des revendications 13 ou 14, **caractérisée en ce que** la seconde branche (2) de l'angle est guidée verticalement ou horizontalement.

16. Installation de commutation selon l'une quelconque des revendications avec deux ou plus de deux phases encapsuléees, **caractérisée en ce que**, dans toutes les phases, les sectionneurs mixtes (71, 72, 73) et des appareils de commutation éventuellement prévus et réalisés comme sectionneurs ou seulement comme prises de terre sont réalisés de façon similaire.

17. Installation de communication selon l'une quelconque des revendications avec deux ou plus de deux phases encapsulées, **caractérisée en ce que**, dans toutes les phases, les sectionneurs mixtes (71, 72, 73) et d'autres appareils de commutation éventuellement prévus et réalisés seulement comme sectionneurs ou seulement comme prises de terre sont réalisés de façon similaire.

18. Installation de commutation selon l'une quelconque des revendications 16-17, **caractérisée en ce que** des appareils de commutation disposés dans différentes phases, mais remplissant des fonctions similaires sont disposés sur une diagonale déterminée par l'espacement vertical et par l'espacement horizontal.
